# EUROPÄISCHE PATENTSCHRIFT

(11) **EP 2 151 154 B1**
(45) Veröffentlichungstag und Bekanntmachung des Hinweises auf die Patenterteilung: **29.06.2011**
(21) Anmeldenummer: 09009954.0
(22) Anmeldetag: 01.08.2009
(51) Int. Cl.: A01C 5/06, A01C 7/20

(54) **Scheibensäschar**
Seeding disc coulter
Disque de semoir

(30) Priorität: 08.08.2008 DE 102008037135
(43) Veröffentlichungstag der Anmeldung: 10.02.2010
(73) Patentinhaber: Amazonen-Werke H. Dreyer GmbH & Co. KG, 49205 Hasbergen (DE)
(72) Erfinder: Feldhaus, Werner, 27801 Dötlingen (DE); Goretzko, Robert, 28201 Bremen (DE); Pokriefke, Michael, 27798 Hude (DE); Steen, Rüdiger, 27798 Hude (DE); Tiessen, Reimer Uwe, 26135 Oldenburg (DE)

(56) Entgegenhaltungen:
- EP-A2- 0 916 246
- US-A- 4 986 200
- US-A- 5 481 990

## Beschreibung

Die Erfindung betrifft ein Scheibensäschar gemäß des Oberbegriffes des Anspruches 1.

Ein derartiges Scheibensäschar ist beispielsweise in der EP 09 162 46 B1 beschrieben. Der Tragkörper der Tiefenführungsscheibe dieses Scheibensäschares ist einerseits nicht ausreichend tragfähig und andererseits ist die Walkfähigkeit der aus flexiblem Material bestehenden Tiefenführungsscheibe nicht ausreichend, so dass zuviel Erdreich an der Tiefenführungsscheibe, insbesondere bei feuchten und nassen Einsatzbedingungen anhaftet.

Der Erfindung liegt die Aufgabe zugrunde, eine ausreichend tragfähige Tiefenführungsscheibe mit einer ausreichenden Selbstreinigung, auch unter schwierigen Einsatzbedingungen, zu schaffen.

Diese Aufgabe wird erfindungsgemäß durch die kennzeichnenden Merkmale des Patentanspruches 1 gelöst. In Folge dieser Maßnahme ergeben sich durch die strahlenförmigen, streifenartigen Tragstege einerseits eine ausreichende Tragfähigkeit zur ausreichenden und guten Tiefenführung des Scheibensäschares und andererseits wird durch die auf der Innenseite der Tiefenführungsscheibe angeordneten strahlenförmigen, streifenartigen Noppen und/oder Verrippungen eine entsprechende Verstärkung der Tiefenführungsscheibe und die Gewährleistung einer ausreichenden Walkfähigkeit der Tiefenführungsscheibe erreicht. Durch diese Walkfähigkeit der Tiefenführungsscheibe platzt das anhaftende Erdreich von der Tiefenführungsscheibe ab.

Die ausreichende Tragfähigkeit der Tiefenführungsscheibe einerseits und die gewünschte Walkfähigkeit der Tiefenführungsscheibe andererseits lässt sich dadurch erreichen, dass die Anzahl der Noppen und/oder Verrippungen in den stufenförmigen Ringanordnungen von innen nach außen zunimmt.

In vorteilhafter Weise ist Tiefenführungsscheibe aus Kunststoffmaterial hergestellt. Hierdurch wird mit den vorbeschriebenen Maßnahmen eine gute Tragfähigkeit einerseits und eine gute walkfähigkeit der Tiefenführungsscheibe andererseits erreicht.

Damit die Tragstege eine definierte Tiefenführung des Scheibenschars in ausreichender Weise gewährleisten können, ist vorgesehen, dass die Tragstege sich bis zum radialen Außenumfang der Tiefenführungsscheibe erstrecken.

Eine vorteilhafte Ausgestaltung der Tragstege der Tiefenführungsscheibe wird dadurch erreicht, dass der Abstand zwischen den Tragstegen zumindest annähernd der Breite der Tragstege entspricht.

Um eine ausreichende Tragfähigkeit der Tragstege zur guten Tiefenführung der Scheibensäschares zu erreichen, ist vorgesehen, dass die Breite der Tragstege in ihrem radial äußeren Aufstandsbereich größer 20mm beträgt.

Weitere Einzelheiten der Erfindung sind der Beispielsbeschreibung und den Zeichnungen zu entnehmen. Hierbei zeigen
- Fig.1: die Anordnung zweier Säschare beabstandeter Weise zu einander und in zwei Querreihen hintereinander als ausschnittsweise Darstellung der Scharanordnung einer Sämaschine in perspektivischer Darstellung,
- Fig.2: die Säscharanordnung gemäß Fig.1 in anderer perspektivischer Darstellung,
- Fig.3: die Säscharenordnung in Seitenansicht,
- Fig.4: die Tiefenführungsscheibe in perspektivischer Darstellung in der Ansicht von außen,
- Fig.5: die Tiefenführungsscheibe in perspektivischer Darstellung in der Ansicht von innen,

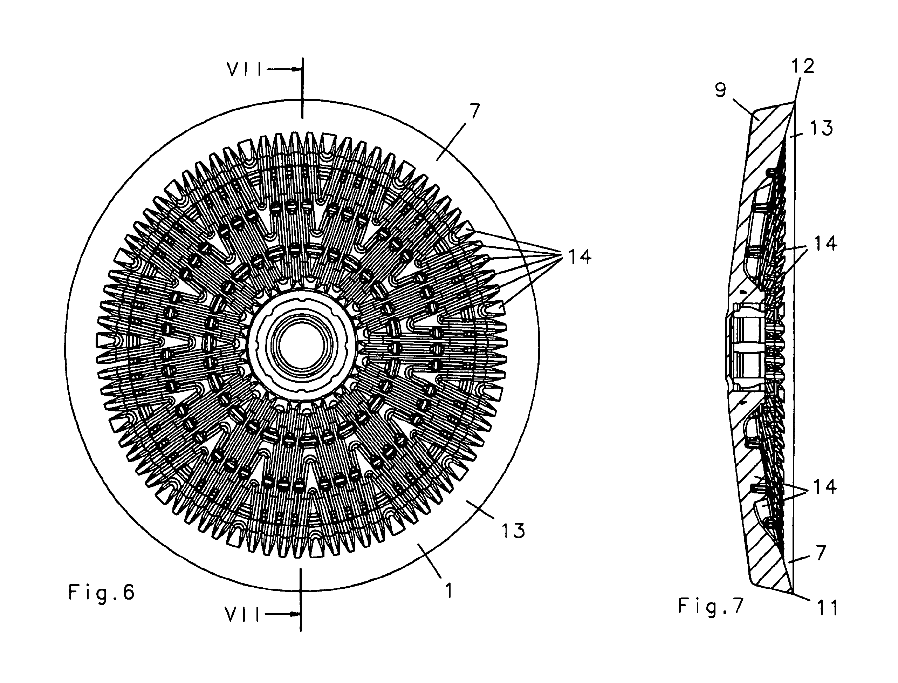

- Fig.6: die Tiefenführungsscheibe in Seitenansicht mit Sicht auf die Innenseite und
- Fig.7: die Tiefenführungsscheibe im Schnitt VII/VII.

Das Scheibensäschar 1 ist mittels einer Scharhalterung 2 in aufrechter Ebene bewegbar an der ausschnittsweise dargestellten Scharschiene 3 eines nicht dargestellten Rahmens einer Sämaschine angeordnet. Das Scheibensäschar 1 weist eine Scharscheibe 4 auf, die jeweils winklig gegenüber der vertikalen und zur Fahrtrichtung 5 schräg angestellt ist. Die Scharscheibe 4 ist mittels eines Drehlagers an der Scharhalterung 2 drehbar gelagert. Des weiteren ist der Scharscheibe 4 in Fahrtrichtung 5 gesehen, eine auf der Schattenseite 6 der Scharscheibe 4 angeordnet und entgegengesetzt zur Scharscheibe 4 geneigte, sowie drehbar gelagerte und aus einem flexiblen Material bestehende Tiefenführungsscheibe 7 zugeordnet. Diese

Tiefenführungsscheibe 7 weist auf der äußeren Scheibenebene 8, die der Scharscheibe 4 abgewandt ist, aus der äußeren Scheibenebene 8 herausragende Tiefenführungselemente 9 auf.

Diese auf der Außenseite 8 der Tiefenführungsscheibe 7 angeordnete Tiefenführungselemente 9 sind in einem radial äußeren Ringbereich 10 der Tiefenführungsscheibe 7 als strahlenförmig und streifenartig ausgebildete Tragstege ausgestaltet. Diese Tragstege 9 sind beabstandet zueinander angeordnet. Die Tragstege 9 erstrecken sich bis zum radialen Außenumfang 11 der Tiefenführungsscheibe 7, wie die Zeichnungen zeigen. Der Abstand zwischen den Tragstegen 9 entspricht zumindest annähernd der Breite der Tragstege 9. Die Breite der Tragstege beträgt in dem radial äußeren Aufstandsbereich 12 mehr als 20mm.

Die gesamte Tiefenführungsscheibe 7 ist aus einem Kunststoffmaterial hergestellt. Hierdurch weist sie eine entsprechende Flexibilität bereits aufgrund der Materialeigenschaften auf.

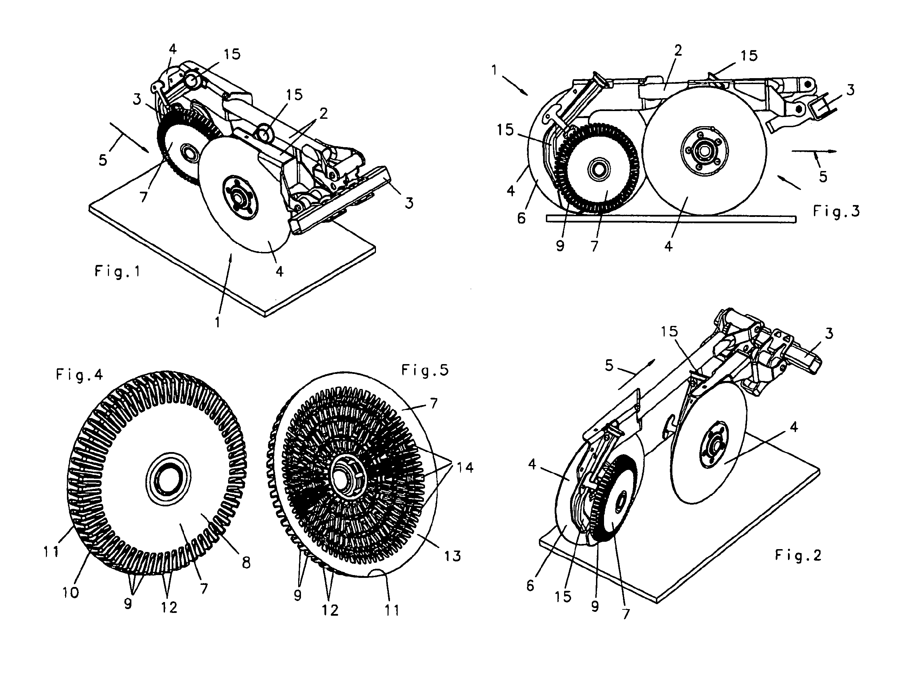

Um die Tiefenführungsscheibe 7 bei ihrer Flexibilität eine ausreichend große Stabilität zu geben, sind auf der Innenseite 13 der Tiefenführungsscheibe 7 in abgestufter Weise ringförmig angeordnete strahlenförmige bzw. streifenartige Noppen oder Verrippungen 14 angeordnet, wie insbesondere Fig. 5 zeigt. Durch die Anordnung der strahlenartigen, streifenartigen Noppen oder Verrippungen 14 auf der Innenseite 13 der Tiefenführungsscheibe 7 wird eine hohe Stabilität für die Tiefenführung des Scheibensäschares 1 bei einer großen Flexibilität, die ein starkes Walken der Tiefenführungsscheibe 7 in Scheibenebene ermöglicht, erreicht. Hierdurch wird sichergestellt, dass durch das Walken sowohl auch auf der Innen- 13 wie auch auf der Außenseite 8 anhaftende Verschmutzungen oder Erdreste in ausreichend sicherer Weise von der Tiefenführungsscheibe 7 abplatzen.

Dem Scheibensäschar 1 ist weiterhin das über nicht dargestellte Saatleitungen an einer Dosier- und Verteileinrichtung anschließbare Saatgutrohr 15 zugeordnet.

## Patentansprüche

1. Scheibensäschar (1) mit einer Scharhalterung, (2) an der eine jeweils winkelig gegenüber der Vertikalen und zur Fahrtrichtung (5) angestellte und drehbar gelagerte Scharscheibe (4) und eine auf der Schattenseite (6) der Scharscheibe (4) und entgegengesetzt zur Scharscheibe (4) geneigte sowie drehbar gelagerte und aus einem flexiblem Material bestehende Tiefenführungsscheibe (7) mit aus der äußeren Scheibenebene (8) herausragenden Tiefenführungselementen (9) angeordnet sind, **dadurch gekennzeichnet, dass** auf der Außenseite (8) der Tiefenführungsscheibe (7) zumindest in deren radialen äußeren Ringbereich (10) strahlenförmige, streifenartige Tragstege (9) beabstandet zueinander angeordnet sind, dass auf der Innenseite (13) der Tiefenführungsscheibe (7) in abgestufter Weise ringförmig angeordnete strahlenförmige streifenartige Noppen und/oder Verrippungen (14) angeordnet sind.

2. Scheibensäschar nach Anspruch 1, **dadurch gekennzeichnet, dass** die Anzahl der Noppen und/oder Verrippungen (14) in den stufenartigen Ringanordnungen von innen nach außen zunimmt.

3. Scheibensäschar nach Anspruch 1, **dadurch gekennzeichnet, dass** die Tiefenführungsscheibe (7) aus Kunststoffmaterial hergestellt ist.

4. Scheibesäschar nach Anspruch 1, **dadurch gekennzeichnet, dass** die Tragstege (9) sich bis zum radialen Außenumfang der Tiefenführungsscheibe (7) erstrecken.

5. Scheibensäschar nach Anspruch 1, **dadurch gekennzeichnet, dass** der Abstand zwischen den Tragstegen (9) zumindest annähernd der Breite Tragstege (9) entspricht.

6. Scheibensäschar nach Anspruch 1, **dadurch gekennzeichnet, dass** die Breite der Tragstege (9) in ihrem radial äußeren Aufstandsbereich (12) größer 20mm beträgt.

## Claims

1. Disc-type sowing coulter (1) having a coulter holder (2), on which are disposed a rotatably mounted coulter disc (4), which is placed in each case at an angle in relation to the vertical and to the direction of travel (5), and a rotatably mounted depth-guiding disc (7), which is on the blind side (6) of the coulter disc (4), inclined in opposition to the coulter disc (4), produced from a flexible material and has depth-guiding elements (9) that protrude from the outer disc plane (8), **characterized in that** on the outside (8) of the depth-guiding disc (7), at least in its radial outer ring region (10), ray-shaped, strip-like support webs (9) are disposed spaced apart from each other, **in that** ray-shaped, strip-like nubs and/or ribbing (14), arranged annularly in a stepped manner, are arranged on the inside (13) of the depth-guiding disc (7).

2. Disc-type sowing coulter according to Claim 1, **characterized in that** the number of nubs and/or amount of ribbing (14) in the step-like ring arrangements increases from the inside outwards.

3. Disc-type sowing coulter according to Claim 1, **characterized in that** the depth-guiding disc (7) is produced from plastics material.

4. Disc-type sowing coulter according to Claim 1, **characterized in that** the support webs (9) extend as far as the radial outer circumference of the depth-guiding disc (7).

5. Disc-type sowing coulter according to Claim 1, **characterized in that** the spacing between the support webs (9) corresponds at least approximately to the width of the support webs (9).

6. Disc-type sowing coulter according to Claim 1, **characterized in that** the width of the support webs (9) in the radially outer contact region (12) thereof is greater than 20 mm.

## Revendications

1. Soc de semoir en forme de disque (1) comportant un support de soc (2) portant un soc en forme de disque (4) incliné par rapport à la direction verticale et à la direction de déplacement (5) et monté à rotation, ainsi qu'un disque de jauge (7) installé au dos (6) du soc en forme de disque (4) et incliné de manière opposée par rapport au disque (4) et monté à rotation, ce disque de jauge étant réalisé en une matière souple avec des éléments de guidage en profondeur (9) dépassant du plan extérieur (8) du disque,
soc de semoir **caractérisé en ce que**
le côté extérieur (8) du disque de jauge (7) comporte au moins dans sa zone annulaire radiale extérieure (10), des nervures d'appui (9) en forme de bandes, radiales, écartées les unes des autres,
le côté intérieur (13) du disque de jauge (7) comporte des bossages et/ou des nervures (14) en forme de rubans, radiaux, répartis de façon annulaire et de manière étagée.

2. Soc de semoir en forme de disque selon la revendication 1, **caractérisé en ce que**
le nombre de bossages et/ou de nervures (14) dans les répartitions annulaires étagées, augmente de l'intérieur vers l'extérieur.

3. Soc de semoir en forme de disque selon la revendication 1, **caractérisé en ce que**
le disque de jauge (7) est en matière plastique.

4. Soc de semoir en forme de disque selon la revendication 1, **caractérisé en ce que**
les nervures d'appui (9) s'étendent jusqu'à la périphérie extérieure radiale du disque de jauge (7).

5. Soc de semoir en forme de disque selon la revendication 1, **caractérisé en ce que**
la distance entre les nervures de support (9) correspond au moins sensiblement à la largeur des nervures de support (9).

6. Soc de semoir en forme de disque selon la revendication 1, **caractérisé en ce que**
la largeur des nervures de support (9) est supérieure à 20 mm dans leur zone d'appui (12) radiale extérieure.
